# FASCICULE DE BREVET EUROPEEN

(11) **EP 1 349 319 B1**
(45) Date de publication et mention de la délivrance du brevet: **24.01.2007**
(21) Numéro de dépôt: 03290550.7
(22) Date de dépôt: 07.03.2003
(51) Int. Cl.: H04L 12/24

(54) **Dispositif de gestion de service réseau utilisant le protocole cops pour la configuration d'un réseau privé virtuel**
Verfahren zur Verwaltung eines Netzwerkdienstes unter Verwendung des COPS Protokolls zur Konfigurierung in einem virtuellen privaten Netzwerk
Method for managing a network service using the COPS protocol for configuring a virtual private network

(30) Priorité: 15.03.2002 FR 0203258
(43) Date de publication de la demande: 01.10.2003
(73) Titulaire: ALCATEL, 75008 Paris (FR)
(72) Inventeur: El Mghazli, Yacine, 94110 Arcueil (FR); Galand, Damien, 92370 Chaville (FR)
(74) Mandataire: Chaffraix, Sylvain

(56) Documents cités:
- WO-A-01/89234
- CHAN ET AL.: "COPS Usage for Policy Provisioning (COPS-PR)" IETF RFC 3084, 1 mars 2001 (2001-03-01), pages 1-34, XP002224809
- DURHAM D ET AL: "RFC 2748 - The COPS (Common Open Policy Service) Protocol" IETF RFC 2748, janvier 2000 (2000-01), XP002217422

## Description

L'invention concerne les réseaux privés virtuels, aussi appelés VPN pour Virtual Private Network, et en particulier les composants participant à la configuration de services de réseau privé virtuel.

Les applications de réseau privé virtuel consistent à connecter deux sites d'utilisateurs distants, par l'intermédiaire du réseau d'un fournisseur de service, en rendant la connexion par le réseau du fournisseur transparente pour les utilisateurs. La recommandation RFC 2547bis définit un des mécanismes de gestion d'un réseau privé virtuel.

Le réseau privé virtuel est parfois modifié par l'ajout d'un site d'un utilisateur du VPN, ou par la modification des sites appartenant au réseau privé virtuel. Lors de modifications du réseau privé virtuel, on utilise habituellement un dispositif de gestion réseau du fournisseur de service, aussi appelé «network manager », qui configure, via le protocole SNMP les routeurs frontière du client ou du fournisseur de service, pour définir la nouvelle configuration du réseau privé virtuel. La définition de la nouvelle configuration du réseau privé virtuel comprend notamment l'envoi, via le protocole SNMP (Simple Network Management Protocol), de modifications d'une base de donnée MIB (Management Information Base) du dispositif de gestion de réseau d'un routeur frontière.

Les dispositifs de gestion de réseaux privés virtuels actuels et leur procédé de fonctionnement présentent des inconvénients. L'envoi d'une configuration d'un service réseau vers un routeur au protocole SNMP présente une granularité trop précise. Ainsi, pour implanter une nouvelle configuration dans le routeur, le gestionnaire doit envoyer une série de paramètres. Ces paramètres sont installés individuellement par le routeur. Il en résulte que si un des paramètres est incorrect, par souci de cohérence, la totalité des paramètres qui forment la configuration doit être désinstallée. De plus, les possibilités de rattrapage d'erreur fournies par le protocole SNMP sont limitées. Cela implique en pratique une gestion prudente du service réseau au détriment des performances. En outre, la priorité accordée aux paquets SNMP par les routeurs frontière est souvent faible. Ainsi, un paquet SNMP contenant des données de configuration est interprété par le routeur frontière en un temps trop élevé par rapport à la réactivité souhaitée. Par ailleurs, l'envoi de paquets de configuration SNMP génère des conflits entre différentes configurations envoyées par plusieurs gestionnaires à un même routeur frontière.

Il existe donc un besoin pour un dispositif de gestion de service réseau, un routeur, un système et un procédé qui résolvent un ou plusieurs de ces inconvénients. L'invention a ainsi pour objet un dispositif de gestion de service réseau, comprenant une base de données PIB pour Policy Information Base, contenant des informations de configuration d'un réseau privé virtuel ; un moteur protocolaire susceptible de générer des paquets de gestion de service réseau au format COPS-PR (Common Office Policy Service for Policy Provisioning) contenant des informations de configuration extraites de la base de données ; une interface de sortie émettant les paquets fournis par le moteur protocolaire.

L'invention a également pour objet un routeur pour réseau privé virtuel, comprenant une interface d'entrée; un moteur protocolaire relié à l'interface d'entrée, susceptible de traiter des paquets COPS-PR reçus sur l'interface d'entrée ; une base de données PIB susceptible de recevoir des informations de configuration provenant du moteur protocolaire.

Selon une variante, le moteur protocolaire COPS-PR est susceptible de générer des paquets au protocole COPS-PR ; il comprend en outre une interface de sortie émettant les paquets fournis par le moteur protocolaire COPS-PR.

L'invention a encore pour objet un système de gestion d'un service réseau, comprenant un réseau d'un fournisseur de service muni d'un tel dispositif et de plusieurs routeurs de ce type, susceptibles de recevoir des paquets émis par le dispositif, et disposés à la frontière du réseau du fournisseur.

L'invention concerne en outre un procédé de gestion de réseau privé virtuel, comprenant les étapes d'émission au protocole COPS-PR, par un dispositif de gestion de service réseau, d'informations de configuration d'au moins un réseau privé virtuel ; de réception par au moins un routeur des informations émises; de configuration d'un routeur récepteur en fonction des informations émises.

Selon une variante, le procédé comprend en outre une étape de stockage et d'interprétation des informations de configuration dans une base de donnée PIB d'un routeur récepteur.

Selon encore une variante, le dispositif de gestion émetteur est inclus dans un réseau d'un fournisseur de service ; un routeur récepteur est un routeur frontière du réseau du fournisseur de service.

Selon une autre variante, le procédé comprend en outre une étape de communication entre le routeur récepteur et un routeur d'une partie client du réseau privé virtuel.

Selon encore une autre variante, le procédé comprend, avant l'étape d'émission par le dispositif de gestion, les étapes de connexion du routeur au dispositif de gestion ; d'émission au protocole COPS-PR, par le routeur, d'informations de configuration du routeur ou du réseau privé virtuel auquel appartient le routeur.

On peut en outre prévoir que le dispositif de gestion émetteur est inclus dans un réseau d'un fournisseur de service ; et qu'un routeur récepteur est un routeur frontière d'une partie client du réseau privé virtuel.

L'invention est maintenant décrite plus en détails dans la description qui suit, et en référence au dessin, dans lequel :

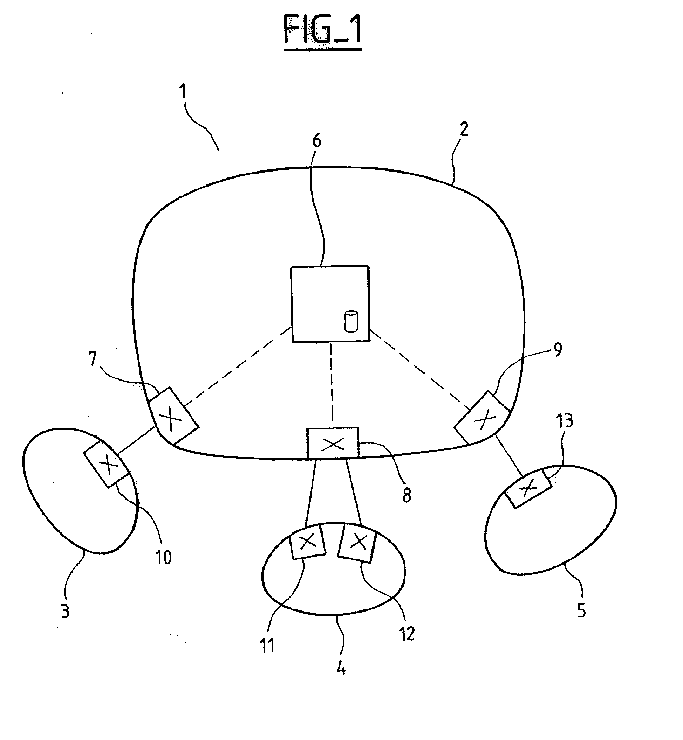

- la figure 1 est une représentation schématique d'un exemple de réseau mettant en oeuvre des réseaux privés virtuels.

Selon l'invention, un dispositif de gestion de réseau envoie vers des routeurs des informations de configuration d'un réseau privé virtuel en utilisant le protocole COPS-PR.

Le protocole COPS est défini dans la recommandation RFC 2748 émise par l'IETF. Ce protocole permet de différencier des paquets de données en fonction de priorités définies dans un entête de chaque paquet. Ce protocole permet notamment de gérer la qualité de service, aussi appelée QoS, en fonction d'un contrat passé avec un client (SLA pour Service Level Agreement). Le protocole COPS-PR est défini dans la recommandation RFC 3084 émise par l'IETF. Ce protocole prévoit l'envoi de données de configuration entre un gestionnaire réseau et des éléments d'un réseau.

L'exemple qui va être présenté par la suite correspond à un réseau gérant le réseau privé virtuel suivant un monde géré par un fournisseur de service, ce mode étant aussi appelé PPVPN pour provider provisioned VPN. La figure 1 représente un réseau 1 comprenant plusieurs réseaux privés virtuels. Ce réseau comprend un réseau du fournisseur de service 2 et des sites clients 3 à 5 connectés au réseau du fournisseur 2. Le réseau du fournisseur de service 2 comprend un dispositif de gestion du réseau 6 centralisé, communément appelé PDP pour Policy Decision Point, connecté à une pluralité de routeurs frontière du fournisseur 7 à 9, communément appelé PE pour Provider Edge. Les routeurs frontière 7 à 9 du fournisseur assurent l'interface du réseau du fournisseur 2 avec les sites clients 3 à 5. Les sites clients présentent des routeurs frontière de clients 10 à 13, raccordés par tout moyen approprié aux routeurs frontière 7 à 9 du fournisseur.

Le gestionnaire 6 comprend une base de donnée de type PIB -pour Policy Information Base-. Cette base de donnée est dans un format adéquat pour l'émission de ses données par un protocole COPS-PR. On doit notamment utiliser la recommandation RFC 3159 émise par l'IETF ou la norme SPPI pour structurer le contenu de la base de données PIB. Cette base de données contient un ensemble d'informations sur la configuration d'un ou plusieurs réseaux privés virtuels. Les informations de configuration de réseau privé virtuel contenues dans la base de donnée PIB sont notamment des paramètres liés aux sites clients 10 à 13 et des paramètres liés aux routeurs frontière 7 à 9 du fournisseur. De tels paramètres sont définis notamment dans la recommandation RFC 2547bis. Parmi les paramètres de sites clients, on peut citer notamment des listes de cibles de routage en entrée/sortie - appelées « lists of export/import route targets » en anglais-, des sites d'origine pour les mises à jour des tables de routage du protocole BGP (Border Gateway Protocol), des listes pour réaliser un filtrage des mises à jour sur la base de discriminants de routage -discriminateurs appelés en anglais « Route Distinguisher » et filtrage appelé en anglais « RD-based filters »- ou encore des listes de filtres réalisant un filtrage basé sur les sites d'origine -appelées en anglais « SO-based filters »-. Parmi les paramètres liés aux routeurs du fournisseur, on peut citer notamment la configuration des tables de routage, des configurations de discriminant de routage -apelés RD ou Route Distinguisher en anglais, à partir desquels un routeur frontière du fournisseur d'accès assigne un discriminant de routage à chaque site pour chaque route-, ou encore des configurations de lois de filtrage vis-à-vis des messages reçus du réseau -appelées « outbound filtering rules » en anglais-. La base de donnée peut être stockée sur tout support adéquat, tel qu'un disque dur ou une mémoire vive.

La base de données communique par une liaison adéquate avec un moteur protocolaire COPS-PR. Ce moteur protocolaire COPS-PR permet de générer des paquets contenant des informations de configuration d'un réseau privé virtuel extraites de la base de données. Ces paquets sont émis par une interface de sortie du dispositif de gestion vers un routeur frontière du fournisseur. Cette interface de sortie communique par tout moyen adéquat connu en soi avec le moteur protocolaire.

Les informations de configuration contenues dans les paquets sont utilisées dans les routeurs destinataires pour modifier ou créer une configuration de réseau privé virtuel. Ainsi, les routeurs frontière 7 à 9 du fournisseur comprennent une interface d'entrée reliée par tout moyen adéquat à l'interface de sortie du dispositif de gestion. Les routeurs frontière comprennent également un moteur protocolaire COPS-PR relié à l'interface d'entrée et traitant les paquets COPS-PR reçus sur l'interface d'entrée. Le moteur protocolaire COPS-PR communique par une liaison adéquate avec une base de données PIB du routeur. Les informations de configuration en provenance du dispositif de gestion sont transmises et stockées dans la base de donnée PIB du routeur. La configuration du routeur comprend ainsi une étape de modification des informations de configuration dans sa PIB. La configuration du réseau privé virtuel mettant en oeuvre ce routeur est alors modifiée. La PIB du routeur 8 peut par exemple être modifiée pour que le routage vers le site 4 transite par le routeur 12 au lieu du routeur 11.

Bien qu'on ait décrit jusque là la structure de routeurs frontière du fournisseur de service et la communication du gestionnaire 6 sur ces routeurs, on peut également envisager que les routeurs frontières du client présentent une même structure ou que ces routeurs frontière du client soient gérés de façon similaire par le gestionnaire 6 du fournisseur de service.

L'utilisation du protocole COPS-PR pour la transmission d'informations de configuration d'un réseau privé virtuel présente dès lors un certain nombre d'avantages.

D'une part, une commande de modification de configuration imposée à un routeur frontière par le dispositif de gestion est transmise de façon transactionnelle. Ainsi, les informations de configuration sont transmises dans un unique bloc contenant un ou plusieurs paquets. La granularité de configuration est adaptée à des configurations de type règle comme pour les VPNs. Ainsi, lorsque le routeur a reçu l'intégralité d'un bloc d'informations de configuration, il détermine d'une part qu'il a reçu l'intégralité des informations de configuration et il lui suffit d'autre part d'appliquer ces informations pour que les modifications du réseau privé virtuel soient prises en compte. Tous les paramètres qui forment la règle sont installés. Le protocole COPS-PR présente ainsi un aspect transactionnel. En cas de problème sur l'un des paramètres, aucun des paramètres n'est installé. Les modifications d'un réseau privé virtuel peuvent être prises en compte quasiment en temps réel par le réseau du fournisseur de service. Par contraste, d'autres protocoles présentent une granularité plus faibles, qui se manifeste par un morcellement en plusieurs blocs des informations de configuration. L'application des informations d'un seul bloc n'est alors pas possible et n'est donc pas de type transactionnelle. e permet alors pas de prendre en compte les modifications du service réseau.

D'autre part, l'utilisation du protocole COPS-PR suppose qu'un routeur frontière soit raccordé à un unique dispositif de gestion de service réseau. Ainsi, le routeur frontière ne reçoit pas des informations de configuration d'un réseau privé virtuel conflictuelles, provenant de différents dispositifs de gestion du réseau. La fiabilité de la configuration mise en place sur un routeur frontière est ainsi améliorée. Du fait de cette fiabilité améliorée, il n'est pas indispensable d'utiliser des applications de vérification de configuration régulières du VPN. De plus, la connexion d'un routeur frontière à un unique dispositif de service réseau permet à ce dispositif de gestion de service réseau de détecter et de réparer une défaillance du routeur frontière beaucoup plus rapidement. Un routeur frontière et son dispositif de gestion associé peuvent ainsi effectuer un partage d'état régulier pour prévenir des défaillances. Le dispositif de gestion peut ainsi mettre à jour sa PIB à intervalles réguliers pour prendre en compte le dernier état d'un routeur frontière. Le protocole COPS-PR présente également des fonctionnalités de rattrapage d'erreur, encore facilitées par la connexion d'un routeur frontière à un unique dispositif de service réseau.

Le dispositif de gestion 6 peut présenter une interface par laquelle il reçoit des commandes de modification d'un réseau privé virtuel. Du fait du temps de réponse réduit entre l'envoi d'informations de configuration par le dispositif de gestion et la prise en compte de ces informations par un routeur frontière, il est possible de proposer des services de modification de réseau privé virtuel à un client pratiquement en temps réel. On peut par exemple prévoir qu'un client se connecte à un dispositif de gestion de réseau 6 via une signalisation quelconque. Le client peut par exemple demander au serveur d'inclure le site 5 dans un réseau privé virtuel qui ne comprenait auparavant que les sites 3 et 4. Les bases de données PIBs du dispositif de gestion 6 sont alors modifiées de façon adéquate. Des paquets COPS-PR contenant les informations de configuration adéquates de chaque base de données PIB sont alors envoyés aux routeurs 7 à 9. Après réception et traitement des paquets, les routeurs 7 à 9 modifient leur configuration pour le réseau privé virtuel. Les routeurs 7 à 9 gèrent ensuite les flux de données à l'intérieur d'un VPN de façon connue en soi. Le service de réseau privé virtuel peut ainsi acquérir une souplesse de modification inconnue jusqu'alors. Les modifications d'un service VPN proposées à la clientèle peuvent par exemple être du type création d'un nouveau VPN, ajout d'un site à un VPN existant ou réglage de paramètres de filtrage d'un VPN existant.

Un routeur frontière présente en outre un moteur protocolaire susceptible de générer des paquets COPS-PR. Ainsi, lors du raccordement initial ou de la mise à jour d'un nouveau routeur frontière à un dispositif de gestion, ce routeur peut transmettre des paquets COPS-PR précisant ses paramètres, tels que le nombre d'instance de routage supporté, ses capacités de séparation de flux, etc...Le routeur peut également transmettre, lors de son raccordement initial ou de sa mise à jour, des informations concernant le VPN auquel il appartient. Le moteur protocolaire de génération de paquets COPS-PR est le pendant du moteur protocolaire de traitement centralisé dans le gestionnaire 6.

Les présents modes de réalisation et exemples doivent être considérés comme ayant été présentés à titre illustratif et non restrictif et l'invention n'est pas censée être limitée aux détails fournis ici mais peut être modifiée en restant dans le cadre de la portée des revendications annexées. On peut ainsi prévoir dans le cadre de l'invention d'utiliser tout moyen de transmission approprié entre les routeurs frontière du fournisseur, les routeurs frontière du client et le dispositif de gestion de service réseau. Par ailleurs, bien que le mode de réalisation présenté soit appliqué au réseau du fournisseur de service, on peut également envisager d'appliquer l'invention aux sites des clients du service de réseau privé virtuel. On peut ainsi envisager des modifications du réseau privé virtuel par transmission d'informations de configuration au protocole COPS-PR entre un dispositif de gestion et un routeur frontière du site client.

## Revendications

1. Dispositif de gestion de service réseau (6), comprenant :
- une base de données PIB, Policy Information Base, contenant des informations de configuration d'un réseau privé virtuel ;
- un moteur protocolaire susceptible de générer des paquets de gestion de service réseau au format COPS-PR, Common Office Policy Service for Policy Provisioning, contenant des informations de configuration extraites de la base de données ;
- une interface de sortie émettant les paquets fournis par le moteur protocolaire vers des routeurs récepteurs (7-9).

2. Routeur (7-13) pour réseau privé virtuel, comprenant :
- une interface d'entrée;
- un moteur protocolaire relié à l'interface d'entrée, susceptible de traiter des paquets COPS-PR, Common Office Policy Service for Policy Provisioning, reçus sur l'interface d'entrée ;
- une base de données PIB, Policy Information Base, susceptible de recevoir des informations de configuration provenant du moteur protocolaire.

3. Le routeur de la revendication 2, **caractérisé en ce que**:
- le moteur protocolaire COPS-PR est susceptible de générer des paquets au protocole COPS-PR ;
- il comprend en outre une interface de sortie émettant les paquets fournis par le moteur protocolaire COPS-PR.

4. Système de gestion d'un service réseau, comprenant ;
- un réseau d'un fournisseur de service muni :
- d'un dispositif (6) selon la revendication 1;
- plusieurs routeurs (7-9) selon l'une des revendications 2 ou 3, susceptibles de recevoir des paquets émis par le dispositif, et disposés à la frontière du réseau du fournisseur.

5. Procédé de gestion de réseau privé virtuel, comprenant les étapes de :
- génération par un moteur protocolaire de paquets de gestion de service réseau au format COPS-PR, de Common Office Policy Service for Policy Providing, contenant des informations de configuration extraites d'une base de données PIB, Policy Information Base, d'un dispositif de gestion de service réseau (6);
- émission au protocole COPS-PR, par le dispositif de gestion de service réseau, des informations de configuration d'au moins un réseau privé virtuel ;
- réception par au moins un routeur des informations émises;
- configuration d'un routeur récepteur (7-9) en fonction des informations émises

6. Le procédé de la revendication 5, **caractérisé en ce qu'**il comprend en outre une étape de stockage et d'interprétation des informations de configuration dans la base de donnée PIB d'un routeur récepteur.

7. Le procédé de la revendication 5 ou 6, **caractérisé en ce que** :
- le dispositif de gestion émetteur est inclus dans un réseau d'un fournisseur de service ;
- un routeur récepteur est un routeur frontière du réseau du fournisseur de service.

8. Le procédé de la revendication 7, **caractérisé en ce qu'**il comprend en outre une étape de communication entre le routeur récepteur et un ' routeur d'une partie client du réseau privé virtuel.

9. Le procédé de revendication 7 ou 8, **caractérisé en ce que** le procédé comprend, avant l'étape d'émission par le dispositif de gestion, les étapes de :
- connexion du routeur au dispositif de gestion ;
- émission au protocole COPS-PR, par le routeur, d'informations de configuration du routeur ou du réseau privé virtuel auquel appartient le routeur.

10. Le procédé de l'une des revendications 5 à 9, **caractérisé en ce que** :
- le dispositif de gestion émetteur est inclus dans un réseau d'un fournisseur de service :
- un routeur récepteur est un routeur frontière d'une partie client du réseau privé virtuel.

## Claims

1. Network service manager device (6), including:
- a PIB (Policy Information Base) database containing configuration information for a virtual private network;
- a protocol engine able to generate COPS-PR (Common Office Policy Service for Policy Provisioning) format network service management packets containing configuration information extracted from the database; and
- an output interface for sending packets supplied by the protocol engine to receiver routers (7-9).

2. Virtual private network router (7-13), including:
- an input interface;
- a protocol engine connected to the input interface and able to process COPS-PR (Common Office Policy Service for Policy Provisioning) packets received at the input interface; and
- a PIB (Policy Information Base) database adapted to receive configuration information from the protocol engine.

3. Router of claim 2, **characterised in that**:
- the COPS-PR protocol engine is able to generate COPS-PR protocol packets; and
- it further includes an output interface for sending packets supplied by the COPS-PR protocol engine.

4. Network service management system, including:
- a service provider network including:
- a device (6) according to claim 1; and
- a plurality of routers (7-9) according to either claim 2 or claim 3, able to receive packets sent by the device, and disposed at the edge of the provider network.

5. Virtual private network management method, including the steps of:
- a protocol engine generating COPS-PR (Common Office Policy Service for Policy Provisioning) format network service management packets containing configuration information extracted from a PIB (Policy Information Base) database of a network service manager device (6);
- a network service manager device sending configuration information for at least one virtual private network using the COPS-PR protocol;
- at least one router receiving the information sent; and
- configuring a receiver router (7-9) as a function of the information sent.

6. Method of claim 5, **characterised in that** it further includes a step of storing and interpreting configuration information in the PIB database of a receiver router.

7. Method of claim 5 or claim 6, **characterised in that**:
- the sender manager device is included in a service provider network; and
- a receiver router is an edge router of the network of the service provider.

8. Method of claim 7, **characterised in that** it further includes a step of communication between the receiver router and a router of a client portion of the virtual private network.

9. Method of claim 7 or claim 8, **characterised in that** the method includes, prior to the step of sending by the manager device, the steps of:
- connecting the router to the manager device; and
- the router sending configuration information for the router or the virtual private network to which the router belongs using the COPS-PR protocol.

10. Method of any of claims 5 to 9, **characterised in that**:
- the sender manager device is included in a service provider network; and
- a receiver router is an edge router of a client portion of the virtual private network.

## Patentansprüche

1. Vorrichtung zur Verwaltung eines Netzwerkdienstes (6), beinhaltend:
- eine Datenbank PIB, Policy Information Base, die Konfigurierungsinformationen für ein virtuelles privates Netzwerk enthält;
- einen Protokollmotor, der Pakete zur Verwaltung eines Netzwerkdienstes im Format COPS-PR, Common Office Policy Service for Policy Provisioning, erzeugen kann, die aus der Datenbank herausgezogene Konfigurierungsinformationen enthalten;
- ein Ausgabeinterface, das die vom Protokollmotor gelieferten Pakete an Empfängerrouter (7-9) sendet.

2. Router (7-13) für virtuelles privates Netzwerk, beinhaltend:
- ein Eingabeinterface;
- einen Protokollmotor, der mit dem Eingabeinterface verbunden ist und die am Eingabeinterface empfangenen COPS-PR-Pakete, Common Office Policy Service für Policy Provisioning, bearbeiten kann;
- eine Datenbank PIB, Policy Information Base, die vom Protokollmotor herkommende Konfigurierungsinformationen empfangen kann.

3. Router aus Anspruch 2, **dadurch gekennzeichnet, dass**:
- der COPS-PR-Protokollmotor Pakete mit dem Protokoll COPS-PR erzeugen kann;
- er außerdem ein Ausgabeinterface beinhaltet, das die vom COPS-PR-Protokollmotor gelieferten Pakete sendet.

4. System zur Verwaltung eines Netzwerkdienstes, beinhaltend:
- eine Vorrichtung (6) gemäß Anspruch 1;
- mehrere Router (7-9) gemäß einem der Ansprüche 2 oder 3, die von der Vorrichtung gesendete Pakete empfangen können und an der Grenze des Netzwerks des Anbieters angeordnet sind.

5. Verfahren zur Verwaltung eines virtuellen privaten Netzwerks, folgende Schritte beinhaltend:
- durch einen Protokollmotor Generierung von Paketen zur Verwaltung eines Netzwerkdienstes im Format COPS-PR, Common Office Policy Service for Policy Provisioning, die aus einer Datenbank PIB, Policy Information Base, herausgezogene Informationen zur Konfigurierung einer Vorrichtung zur Verwaltung eines Netzwerkdienstes (6) enthalten;
- mit COPS-PR-Protokoll Senden von Konfigurierungsinformationen von mindestens einem virtuellen privaten Netzwerk durch die Vorrichtung zur Verwaltung eines Netzwerkdienstes;
- Empfangen der gesendeten Informationen durch mindestens einen Router;
- Konfigurierung eines Empfangsrouters (7-9) in Abhängigkeit von den gesendeten Informationen.

6. Verfahren gemäß Anspruch 5, **dadurch gekennzeichnet, dass** es außerdem einen Schritt Speicherung und Interpretation der Konfigurierungsinformationen in der Datenbank PIB eines Empfängerrouters beinhaltet.

7. Verfahren gemäß Anspruch 5 oder 6, **dadurch gekennzeichnet, dass**:
- die Senderverwaltungsvorrichtung in ein Netzwerk eines Dienstanbieters eingeschlossen ist;
- ein Empfängerrouter ein Schnittstellenrouter des Netzwerks des Dienstanbieters ist.

8. Verfahren aus Anspruch 7, **dadurch gekennzeichnet, dass** es außerdem einen Schritt Kommunikation zwischen dem Empfängerrouter und einem Router eines Client-Teils des virtuellen privaten Netzwerks beinhaltet.

9. Verfahren aus Anspruch 7 oder 8, **dadurch gekennzeichnet, dass** das Verfahren vor dem Schritt Senden mit der Verwaltungsvorrichtung folgende Schritte beinhaltet:
- Anschluss des Routers an die Verwaltungsvorrichtung;
- mit COPS-PR-Protokoll und durch den Router Senden von Konfigurierungsinformationen des Routers oder des virtuellen privaten Netzwerks, zu dem der Router gehört.

10. Verfahren aus einem der Ansprüche 5 bis 9, **dadurch gekennzeichnet, dass**:
- die Senderverwaltungsvorrichtung in ein Netzwerk eines Dienstanbieters eingeschlossen ist;
- ein Empfängerrouter ein Schnittstellenrputer eines Client-Teils des virtuellen privaten Netzwerks ist.
